# EUROPÄISCHE PATENTSCHRIFT

(11) **EP 4 585 361 B1**
(45) Veröffentlichungstag und Bekanntmachung des Hinweises auf die Patenterteilung: **13.05.2026**
(21) Anmeldenummer: 25158311.8
(22) Anmeldetag: 13.09.2021
(51) Int. Cl.: B23Q 1/00, B23Q 3/06, B23Q 7/04

(54) **SPANNVORRICHTUNG**
CLAMPING DEVICE
DISPOSITIF DE SERRAGE

(43) Veröffentlichungstag der Anmeldung: 16.07.2025
(62) Teilanmeldung aus: 21196241.0
(73) Patentinhaber: SMW-AUTOBLOK Spannsysteme GmbH, 88074 Meckenbeuren (DE)
(72) Erfinder: Maurer, Eckhard, 88094 Oberteuringen (DE); Dannecker, Patrick, 74243 Hardthausen (DE)
(74) Vertreter: Christ, Niko

(56) Entgegenhaltungen:
- EP-A1- 3 391 991
- EP-A1- 3 653 333
- DE-B3- 102012 014 617

## Beschreibung

Die Erfindung bezieht sich auf eine Spannvorrichtung zur Halterung eines durch eine Werkzeugmaschine zu bearbeitenden Werkstückes nach dem Oberbegriff des Patentanspruches 1.

Eine solche Spannvorrichtung ist bereits aus der DE 10 2012 014 617 B3 vorbekannt. Weiterer Stand der Technik ist der EP 3 391 991 A1 und der EP 3 653 333 B1 zu entnehmen.

Solche Spannvorrichtungen können bekannterweise als Spannfutter, als Schraubstock oder als Nullpunktspannsysteme eingesetzt werden. Für alle derartigen Spannvorrichtungen ist dabei die zentrierte Anordnung des Werkstückes bezogen auf eine Referenzebene oder Referenzachse, beispielsweise die Symmetrieachse des Gehäuses, von technisch entscheidender Bedeutung, denn das Werkstück soll möglichst mit einer geringen Fehlertoleranz durch eine Werkzeugmaschine bearbeitet werden können. Hierzu ist es erforderlich, die exakte Position des Werkstückes bezogen auf eine Referenzebene oder Referenzachse zu kennen und bei einem Austausch des baugleichen Werkstückes diese Einspannposition wiederholungsgenau zu erreichen.

Nachteiliger Weise sind derzeit die zu bearbeitenden Werkstücke manuell von Bedienpersonal auszuwechseln. Jedes zu bearbeitende Werkstück ist folglich einzuspannen und nach dem Bearbeitungsprozess aus der Spannvorrichtung zu entfernen, um ein weiteres Werkstück in die Spannvorrichtung einsetzen zu können.

Des Weiteren hat sich als nachteilig bei den bekannten Spannvorrichtungen herausgestellt, dass die Position des Werkstückes beim Einsetzen und/oder während des Bearbeitungsprozesses aufgrund der dann vorherrschenden Fliehkräfte, beispielsweise des Spannfutters oder der Rotation einer Palette bzw. des Werkstückzeugtisches einer Werkzeugmaschine, verändert ist. Beim Einsetzen des Werkstückes können Partikel in Form von Spänen oder sonstigen Verunreinigungen zwischen dem Werkstück und der Spannbacke bzw. dem Werkstück und einer dem Gehäuse zugeordneten Anlagefläche, auf die das Werkstück plan aufzusetzen ist, vorhanden sein, durch die dann eine Positionsveränderungen des Werkstückes erfolgt. Somit ist zunächst vor dem Beginn des Bearbeitungsprozesses durch die Werkzeugmaschine zu überprüfen, ob das Werkstück korrekt in der Spannvorrichtung eingesetzt ist. Da jedoch das Einsetzen des Werkstückes manuell erfolgt und die bekannten Spannvorrichtungen oftmals hydraulische oder mechanische Antriebseinrichtungen zur Bewegung der Spannbacken verwenden, ist eine Positionsüberprüfung des eingesetzten Werkstückes mit einem erheblichen Zeitaufwand verbunden und das Bedienpersonal benötigt entsprechende technische Kenntnisse, um diese Kontrolle des eingesetzten Werkstückes durchführen zu können.

Es ist daher Aufgabe der Erfindung sowohl ein automatisiertes Einsetzen als auch eine Spannvorrichtung der eingangs genannten Gattung weiterzubilden, durch die eine automatisierte Positionsüberprüfung des eingesetzten Werkstückes durchführbar ist und dass bei Vorliegen des Prüfergebnisses entweder der Beginn des Bearbeitungsprozesses automatisiert in Gang gesetzt ist oder eine Überprüfung der Position des Werkstückes in der Spannvorrichtung vorzunehmen ist.

Diese Aufgabe ist erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass an dem Gehäuse eine elektromechanische und/oder induktive Schnittstelle vorgesehen ist, die mit der Antriebseinrichtung und/oder einer Auswerteeinrichtung induktiv und/oder mittels elektrischen Leitungen verbunden ist, dass die Schnittstelle für einen externen Roboterarm zugänglich ist und mit diesem derart kommuniziert, dass elektrische Datensignale und/oder elektrische Energie zwischen der Schnittstelle und dem Roboterarm wechselweise und bidirektional übertragbar sind, erfolgt eine automatisierte Abfrage hinsichtlich der Einspannposition des Werkstückes in der Spannvorrichtung bevor der Bearbeitungsprozess durch die Werkzeugmaschine beginnt.

Vorteilhafterweise kann der zur automatisierten Überprüfung der Einspannposition des Werkstückes in der Spannvorrichtung verwendete Roboterarm an einem Fahrgestell montiert sein, sodass der Roboterarm in einer Montagehalle frei beweglich ist und somit mehrere Werkzeugmaschinen anfahren und deren Einspannparameter abfragen kann. Es ist ohne weiteres vorstellbar, den Roboterarm an einer Decke, einem Kran oder dergleichen zu befestigen und diesen in einem bestimmten Flächenbereich bewegen zu können, indem die entsprechenden Werkzeugmaschinen aufgestellt sind.

Durch eine dem Fahrgestell des Roboterarmes zugeordnete Steuereinrichtung kann dabei vorteilhafterweise sowohl die Bewegung des Roboterarmes als auch die Abfrage der Einspannposition des Werkstückes an der Spannvorrichtung durchführbar sein. Erst wenn durch die Steuereinrichtung die Abfrage der Einspannposition erfolgt ist und dabei festgestellt wurde, dass das Werkstück korrekt eingespannt ist, gibt die Steuereinrichtung ein entsprechendes elektrisches Befehlssignal, durch das die Werkzeugmaschine freigeschaltet ist. Folglich kann somit nach dem Einsetzen des Werkstückes in die jeweilige Spannvorrichtung automatisiert die Einspannposition des Werkstückes abgefragt, kontrolliert und bei Vorliegen von entsprechenden Messergebnissen der Bearbeitungsprozesses freigeschaltet sein.

Um die elektrische Datensignalübertragung zwischen der Spannvorrichtung und dem Roboterarm herzustellen, sind an dem Gehäuse Pins oder Steckplätze zur mechanischen und elektrischen Kopplung vorgesehen. Wahlweise kann eine induktive Schnittstelle in Form einer Auflagefläche vorhanden sein. Dem freien Ende des Roboterarmes sind entsprechend damit korrespondierende mechanische oder induktive Schnittstellen vorgesehen, sodass der Roboterarm entweder mechanisch und elektrisch mit der mechanischen Schnittstelle des Gehäuses während des Überprüfungszeitraums verbunden ist oder zwischen dem Roboterarm und der induktiven Schnittstelle des Gehäuses entsteht eine berührungslose Datenübertragung. Durch die verwendeten mechanischen und induktiven Schnittstellen können dabei sowohl elektrische Datensignale als auch elektrische Energie wechselweise, also bidirektional zwischen der Spannvorrichtung und dem Roboterarm übertragen sein. Der Roboterarm ist über entsprechende Antennen, WLAN-Verbindungen oder elektrische Leitungen mit einem Steuerzentrum kommunikativ verbunden, sodass die von dem Roboterarm ausgewerteten bzw. erhaltenen Messdaten unverzüglich an den Steuerraum übertragen werden können. Demnach kann eine entsprechende Maschinenhalle zentral von einem Steuerraum überwacht und betrieben sein, in der mehrerer solcher Werkzeugmaschinen vorhanden sind.

In der Zeichnung ist ein erfindungsgemäßes Ausführungsbeispiel einer Spannvorrichtung in unterschiedlichen konstruktiven Ausgestaltungen abgebildet, die nachfolgend näher erläutert ist. Im Einzelnen zeigt:
- Figur 1a: eine auf einem Werkzeugtisch montierte Spannvorrichtung, durch die ein Werkstück zwischen drei Spannbacken eingesetzt und von diesen während des Bearbeitungsprozesses einer Werkzeugmaschine eingespannt ist und einen Roboterarm, der auf einem Fahrgestell montiert ist und das Werkstück automatisch auf der Spannvorrichtung platziert, in perspektivischer Ansicht,
- Fig. 1b: die Werkzeugmaschine, die Spannvorrichtung und der Roboterarm gemäß Figur 1a, wobei der Roboterarm und die Spannvorrichtung mittels elektromechanischer und induktiver Schnittstellen miteinander kommunizieren,
- Figur 2a: die Spannvorrichtungen gemäß Figur 1a, wobei der Roboterarm um 90° gedreht ist, um die Schnittstellen zueinander auszurichten,
- Figur 2b: die Spannvorrichtung gemäß Figur 2a von einer anderen Seite in vergrößerter Darstellung,
- Figur 3: die Spannvorrichtung gemäß Figur 1a in vergrößerter Darstellung und mit einem Aufbruch zur Verdeutlichung der Konstruktion und Funktion eines Nullpunktspannsystems,
- Figur 4: die Spannvorrichtung gemäß Figur 1a, in Form eines Schraubstockes mit zwei aufeinander zustellbaren Spannbacken und der von außen frei zugänglichen elektromechanischen und induktiven Schnittstellen sowie den Roboterarm, der benachbart zu der Schnittstelle des Gehäuses angeordnet ist, und
- Figur 5: eine Palette oder ein Werkzeugtisch der Werkzeugmaschine, auf der die Spannvorrichtung gemäß Figur 1a in Form eines Spannfutters montierbar ist.

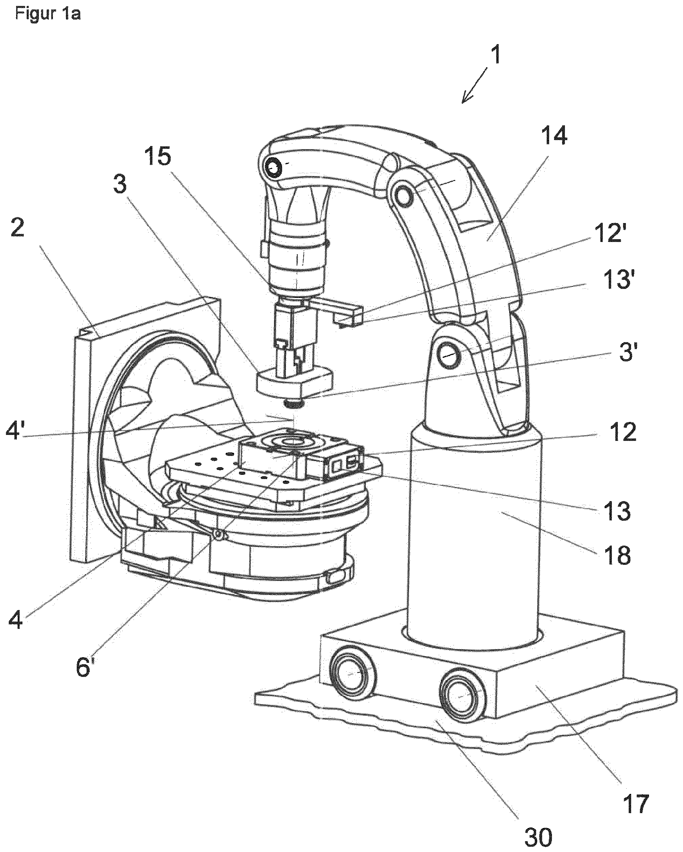

Aus Figur 1a ist ein Beladungsvorgang eines von einer Werkzeugmaschine 2 zu bearbeitenden Werkstückes 3 an einer Spannvorrichtung 1 durch einen Roboterarm 14 zu entnehmen. Der Roboterarm 14 hält das Werkstück 3 und platziert dieses auf die geöffnete Spannvorrichtung 1. Die Spannvorrichtung 1 ist dabei als sogenanntes Nullpunktspannsystem ausgestaltet. Dies bedeutet, dass jedes baugleiche Werkstück 3 aus einer Herstellungsserie wiederholungsgenau auf die exakt vorgegebene Position der Spannvorrichtung 1 zu positionieren ist, um zu gewährleisten, dass die von der Werkzeugmaschine 2 durchgeführten Bearbeitungsschritte ohne Umprogrammieren innerhalb einer Werkzeugserie durchführbar sind.

Die Spannvorrichtung 1 besteht in diesem gezeigten Ausführungsbeispiel aus einem Gehäuse 4, in dessen Inneren drei Spannbacken 7, 8, 9 angeordnet sind. Bei Nullpunktspannsystemen werden solche Spannbacken oftmals auch als Spannschieber bezeichnet. Die Funktion und die konstruktive Ausgestaltung eines Nullpunktspannsystems erfolgt derart, dass das Werkstück 3 oder ein mit dem Werkstück 3 verbundener Spannbolzen in eine in das Gehäuse 4 eingearbeitete Aufnahmeöffnung eingesetzt ist. In dem Gehäuse 4 ist eine elektrisch betriebene Antriebseinrichtung 11 vorgesehen, durch die die Spannbacken 7, 8, 9 synchron bewegt sind. Dabei sind die Spannbacken 7, 8, 9 in nicht dargestellte Führungsnuten axial beweglich eingesetzt; die jeweiligen Führungsnuten verlaufen radial auf eine Referenzachse 4', die der Symmetrieachse der Aufnahmeöffnung des Gehäuses 4 entspricht.

Der Roboterarm 14 weist ein freies Ende 15 auf, an dem zum einen eine Greifeinrichtung zur Halterung des Werkstückes 3 angeordnet ist und zum anderen eine elektromechanische und induktive Schnittstelle 12' bzw. 13'. An der Außenseite des Gehäuses 4 ist eine elektromechanische Schnittstelle 12 und eine induktive Schnittstelle 13 vorgesehen, die mit der jeweiligen Schnittstelle 12' bzw. 13' des Roboterarmes 14 zur Übertragung von elektrischen Datensignalen und elektrischen Energien kommuniziert.

Der Roboterarm 14 ist auf einem Fahrgestell 17 montiert, dem eine Steuereinrichtung 18 zugeordnet ist. Durch die Steuereinrichtung 18 soll das Fahrgestell 17 auf einem Untergrund automatisiert verfahrbar sein und gleichzeitig sollen die für den Roboterarm 14 erforderlichen Bewegungsabläufe von der Steuereinrichtung 18 in Abhängigkeit von der Position des Fahrgestells 17 bzw. des Roboterarmes 14 ausführbar sein.

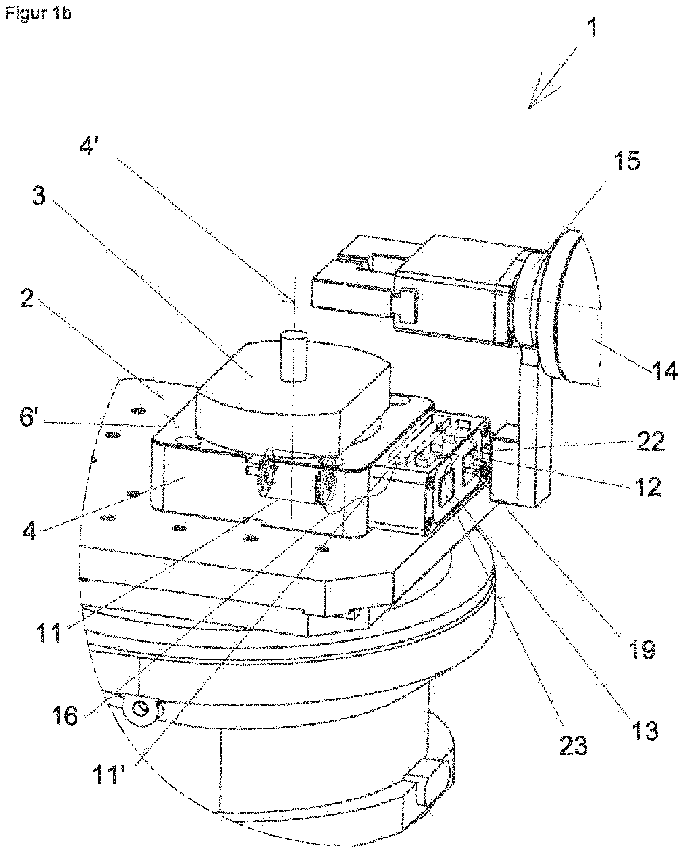

In Figur 1b ist gezeigt, dass der Roboterarm 14 das Werkstück 3 auf einer Auflagefläche 6', die von dem Gehäuse 4 gebildet ist, aufgesetzt hat. Somit liegt das Werkstück 3 auf der von dem Gehäuse 4 vorgegebenen Auflagefläche 6'. Im Inneren des Gehäuses 4 hat die elektrische Antriebseinrichtung 11 die drei Spannbacken 7, 8 bzw. 9 zugestellt. Mittels konstruktiver Maßnahmen entsteht während der Zustellung der Spannbacken 7, 8, 9 eine Einzugskraft, wodurch das Werkstück 3 zunächst auf die Auflagefläche 6' aufgepresst ist und gleichzeitig eine radiale Haltekraft, durch die das Werkstück 3 lageorientiert mit dem Gehäuse 4 verspannt ist.

Sobald demnach das Werkstück 3 auf der Auflagefläche 6' positioniert ist und die Spannbacken 7, 8, 9 zugestellt sind, kann theoretischerweise der Bearbeitungsprozess an der Werkzeugmaschine 2 begonnen werden. Da jedoch das Einsetzen des Werkstückes 3 vollautomatisch durch den Roboterarm 14 vorgenommen ist, muss die Position des Werkstückes 3 in Bezug auf die Referenzfläche 6' überprüft sein. Zu diesem Zweck ist in dem Gehäuse 4 eine elektrische Auswerteeinrichtung 11' vorgesehen, die induktiv und/oder über elektrische Leitungen mit der elektrischen Antriebseinrichtung gekoppelt ist. Es ist nämlich ohne weiteres möglich, die Rotationsgeschwindigkeiten und die damit zusammenhängenden Bewegungsabläufe der elektrischen Antriebseinrichtung 11 zu messen und dadurch den Hubweg der jeweiligen Spannbacke 7, 8, 9 zu errechnen.

Darüber hinaus können in der Auflagefläche 6' mehrere Bohrungen 31 eingearbeitet sein, in die jeweils ein Näherungssensor 32 eingesetzt ist. Die Näherungssensoren 32 sind induktiv betrieben und messen den Abstand zwischen diesen und der Unterseite des Werkstückes 3, sobald dieses positioniert ist. Sollte eines der Messergebnisse, also der Hubweg der jeweiligen Spannbacken 7, 8, 9 und/oder das Messergebnis des Näherungssensors 32 aus einem vorgegebenen Toleranzbereich abweichen, ermittelt dies die elektrische Auswerteeinrichtung 11'.

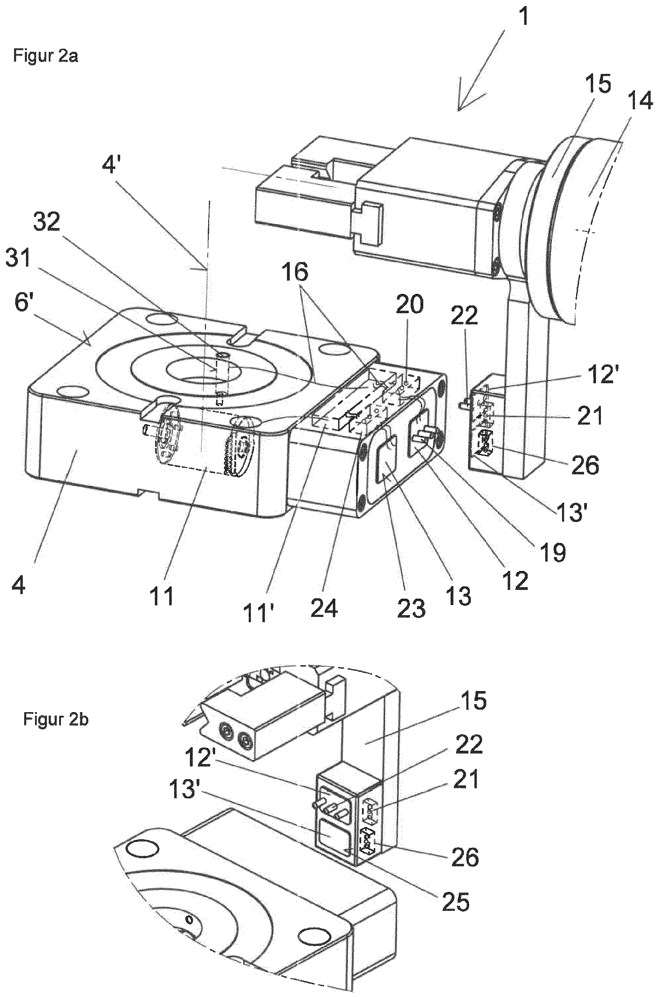

Sobald daher der Roboterarm 14 das Werkstück 3 auf der Auflagefläche 6' platziert hat, dreht der Roboterarm 14 das freie Ende 15 derart, dass die an dem freien Ende 15 des Roboterarmes 14 vorgesehenen elektromechanischen und induktiven Schnittstellen 12', 13' mit den elektromechanischen und induktiven Schnittstellen 12 und 13 des Gehäuses 4 fluchtend zueinander ausgerichtet sind. Gemäß den Figuren 2a und 2b, in denen diese Position dargestellt ist, weisen die elektromechanischen Schnittstellen 12 bzw. 12' entweder Pins 19 und Steckplätze 21 oder umgekehrt Steckplätze 20 und Pins 22 auf, die mechanisch und elektrisch miteinander gekoppelt sind. Folglich entsteht eine elektromechanische oder induktive Datensignal- bzw. Energieübertragung zwischen dem Roboterarm 14 und den im Inneren des Gehäuses 4 vorgesehenen elektrischen Komponenten. Somit kann insbesondere elektrische Energie von dem Roboterarm 14 an die elektrische Antriebseinrichtung 11 oder einem dieser vorgeschalteten Akkumulator übertragen sein und die elektrische Auswerteeinrichtung 11' kann entsprechende Messsignale von den Näherungssensoren 31 an den Roboterarm 14 und die in diesem eingebaute Steuereinrichtung 18 überspielen. Durch die Steuereinrichtung 18 werden solche generierten Messsignale ausgewertet und in einem vorprogrammierten Abfragezyklus mit hinterlegten Daten verglichen. Sollten die Messergebnisse innerhalb eines vorgegebenen Toleranzbereiches liegen, schaltet die Steuereinrichtung 18 über die Schnittstellen 12, 12' oder 13, 13' die Werkzeugmaschine 2 frei oder generiert ein Fehlersignal, um die Position des Werkstückes 3 manuell oder automatisiert zu überprüfen. Wenn die Steuereinrichtung 18 die Freischaltung der Werkzeugmaschine 2 übermittelt hat, entfernt sich der Roboterarm 14 von dem Gehäuse 4, sodass der Bearbeitungsprozess durch die Werkzeugmaschine 2 gestartet ist.

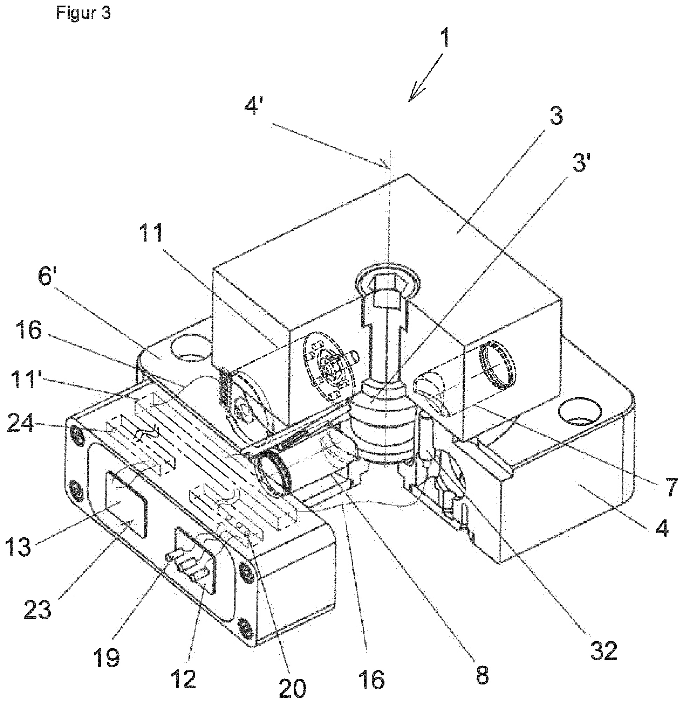

In Figur 3 ist der konstruktive und funktionale Aufbau des als Spannvorrichtung 1 ausgestalteten Nullpunktspannsystems zu entnehmen. Dabei ist auch zu sehen, dass der induktiven Schnittstelle 13 eine oder mehrere als Sendeempfangseinrichtungen 24 fungierende Spulen vorgesehen sind. Die Schnittstelle 13 bildet dabei eine Schaltfläche 25 aus, auf die berührungslos eine an dem freien Ende 15 des Roboterarmes 14 vorgesehene Schaltfläche 25' fluchtend angeordnet werden kann. Somit folgt die induktive Signal- und Energieübertragung berührungslos; wohingegen die paarweise zueinander angeordneten Pins 19 und Steckplätze 21 bzw. Steckplätze 20 und Pins 22 eine mechanische und elektrische Kopplung benötigen.

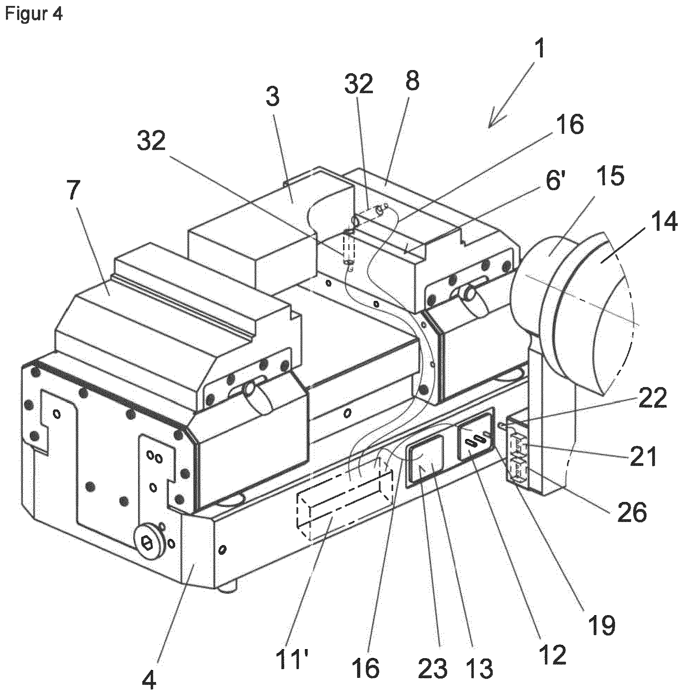

In Figur 4 ist als Spannvorrichtung 1 ein Schraubstock zu entnehmen, der zwei zueinander zustellbare Spannbacken 7 und 8 aufweist, zwischen denen das jeweilige Werkstück 3 eingespannt ist. An einer der freien Außenseiten des Gehäuses 4 sind die elektromechanischen und induktiven Schnittstellen 12 bzw. 13 angeordnet, die mit den an dem Roboterarm 14 vorhandenen elektromechanischen und induktiven Schnittstellen 12' und 13' fluchtend zur Kommunikationsübertragung verlaufen. Folglich kann jeder Roboterarm 14 an beliebige Spannvorrichtungen 1 herangefahren werden, um mit diesen entsprechend zu kommunizieren. Es ist ausschließlich erforderlich, dass die Anordnung der Schnittstellen 12 und 13 mit den Anordnungen der Schnittstellen 12' und 13' räumlich übereinstimmen und somit entweder in einen mechanischen und elektrischen oder in einen induktiven Kopplungszustand überführt sind.

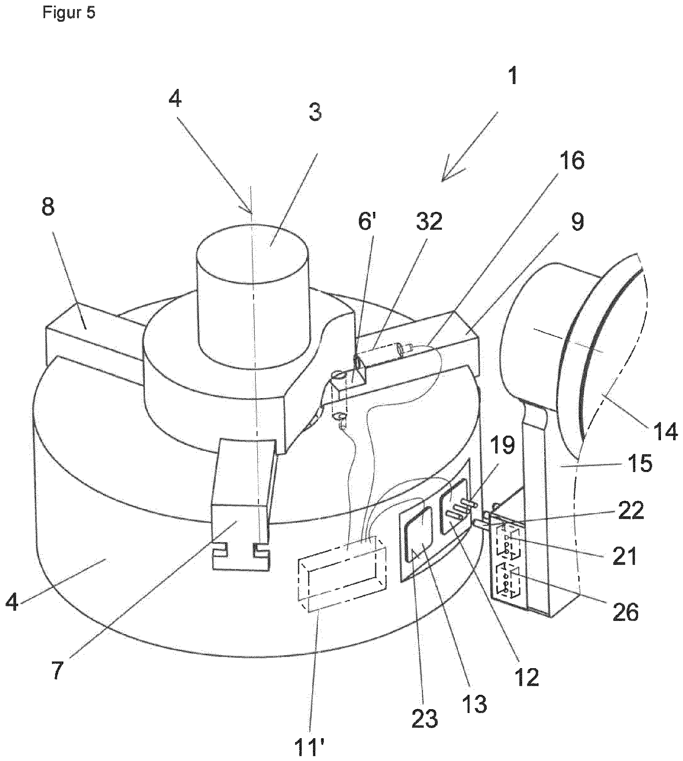

Gleiches gilt für die in Figur 5 abgebildete Spannvorrichtung 1, die hier als Spannfutter mit drei Spannbacken 7, 8 und 9 ausgestaltet ist, zwischen denen das jeweilige Werkstück 3 eingesetzt und eingespannt ist. Oftmals rotieren solche als Spannfutter eingesetzten Spannvorrichtungen 1 während des Bearbeitungsprozesses, sodass ausschließlich im Ruhezustand der Spannvorrichtung 1 eine elektromechanische bzw. induktive Kopplung zwischen den Schnittstellen 12, 13 bzw. 12' und 13' des Roboterarmes 14 erfolgen kann.

Die Übertragung von elektrischen Datensignalen und der elektrischen Energie kann zwischen der Antriebseinrichtung 11, der Auswerteeinrichtung 11' und dem Näherungssensor 32 sowohl induktiv als auch mittels elektrischer Leitungen 16 erfolgen.

## Patentansprüche

1. Spannvorrichtung (1) zur Halterung eines durch eine Werkzeugmaschine (2) zu bearbeitendes Werkstück (3),
bestehend aus:
- einem Gehäuse (4),
- einer Auflagefläche (6'), die vom Gehäuse (4) gebildet ist,
- mindestens einer in dem Gehäuse (4) axial beweglich gelagerten Spannbacke (7) und einem von dem Gehäuse (4) gebildeten Gegenanschlag (10), zwischen denen das Werkstück (3) eingespannt ist oder mindestens zwei in dem Gehäuse (4) axial beweglich gelagerten Spannbacken (7, 8, 9), zwischen denen das Werkstück (3) eingespannt ist, und
- einer Antriebseinrichtung (11), durch die die beweglichen Spannbacken (7, 8 9) gesteuert verfahrbar sind, und durch die eine von den Spannbacken (7, 8, 9) auf das Werkstück (3) oder einen mit dem Werkstück (3) gekoppelten Spannbolzen (3') übertragene Haltekraft während des Spannvorgangs erzeugt ist, und
- einer an dem Gehäuse (4) vorgesehenen, elektromechanischen und/oder induktiven Schnittstelle (12,13), die mit der Antriebseinrichtung (11) und/oder einer Auswerteeinrichtung (11') induktiv und/oder mittels elektrischen Leitungen (16) verbunden ist, und
- einem Roboterarm (14), der mit der Schnittstelle (12,13) derart kommuniziert, dass elektrische Datensignale und/oder elektrische Energie zwischen der Schnittstelle (12, 13) des Gehäuses (4) und einer elektromechanischen und/oder induktiven Schnittstelle (12', 13') des Roboterarmes (14) wechselweise und bidirektional übertragbar sind,
**dadurch gekennzeichnet,**
**dass** die Antriebseinrichtung (11) elektrisch betrieben ist und ein freies Ende des Roboterarms (14), sobald der Roboterarm (14) das Werkstück (3) auf der Auflagefläche (6') platziert hat, derart drehbar ist, dass die an dem freien Ende (15) des Roboterarms (14) vorgesehenen elektromechanischen und induktiven Schnittstellen (12', 13') mit den elektromechanischen und induktiven Schnittstellen (12, 13) des Gehäuses (4) fluchtend zueinander ausgerichtet sind.

2. Spannvorrichtung (1) nach Anspruch 1,
**dadurch gekennzeichnet,**
**dass** die Auswerteeinrichtung (11') mit mindestens einem Näherungssensor (32) elektrisch oder induktiv verbunden ist,
**dass** durch den jeweiligen Näherungssensor (32) die Position des Werkstückes (3) in Bezug auf eine Referenzachse (4') des Gehäuses (4) und/oder in Bezug auf eine dem Gehäuse (4) zugeordneten Auflagefläche (6) gemessen ist,
und **dass** das von dem jeweiligen Näherungssensor (32) ermittelte Messergebnis in Form von elektrischen Datensignalen an die Auswerteeinrichtung (11') weitergeleitet ist.

3. Spannvorrichtung (1) nach Anspruch 1 oder 2,
**dadurch gekennzeichnet,**
**dass** der Roboterarm (14) an einem Fahrgestell (17) montiert ist,
**dass** dem Fahrgestell (17) eine Steuereinrichtung (18) zugeordnet ist, durch die das Fahrgestell (17) und/oder die Bewegungen des Roboterarmes (14) automatisch bewegt sind,
und **dass** durch die Steuereinrichtung (18) ein Programm zur Kontrolle der Einspannsituation des Werkstückes (3) an der Spannvorrichtung (1) durchlaufen ist.

4. Spannvorrichtung (1) nach Anspruch 3,
**dadurch gekennzeichnet,**
**dass** die Rotationsgeschwindigkeit der Antriebseinrichtung (11) und/oder der Hubweg der Spannbacken (7, 8, 9) durch die Steuereinrichtung (18) generiert ist, dass durch diese Abfrage Messergebnisse generiert sind, durch die die Einspannsituation des Werkstückes (3) durch die Steuereinrichtung (18) zu einer Freischaltung der Werkzeugmaschine (2) benutzt ist.

5. Spannvorrichtung (1) nach einem der vorhergehenden Ansprüche,
**dadurch gekennzeichnet,**
**dass** die elektromechanische Schnittstelle (12) einen oder mehrere Pins (19, 19'...) oder Steckplätze (20, 20'...) aufweist,
und **dass** an den freien Enden (15) des Roboterarms (14) damit korrespondierende Steckplätze (21, 21'...) oder Pins (22, 22'...) vorgesehen sind, die paarweise mechanisch und elektrisch gekoppelt sind.

6. Spannvorrichtung (1) nach einem der vorhergehenden Ansprüche,
**dadurch gekennzeichnet,**
**dass** die induktive Schnittstelle (13) eine Schaltfläche (23) aufweist,
**dass** der Schaltfläche (23) eine induktiv betriebene Sende- und/oder Empfangseinrichtung (24) zugeordnet ist, und
**dass** der Roboterarm (14) eine Schaltfläche (25) aufweist, der eine Sende- und/oder Empfangseinrichtung (26) zur Kommunikation mit dem Sender und/oder der Empfangseinrichtung (26) der Schnittstelle (25) der Spannvorrichtung (1) zugeordnet ist.

## Claims

1. Clamping device (1) for holding a workpiece (3) to be machined by a machine tool (2), comprising:
- a housing (4),
- a support surface (6') which is formed by the housing (4),
- at least one clamping jaw (7) axially movably mounted in the housing (4) and a counter-stop (10) formed by the housing (4), between which the workpiece (3) is clamped, or at least two clamping jaws (7, 8, 9) axially movably mounted in the housing (4), between which the workpiece (3) is clamped, and
- a drive device (11) by means of which the movable clamping jaws (7, 8, 9) are controllably movable, and by means of which a holding force transmitted from the clamping jaws (7, 8, 9) to the workpiece (3) or to a clamping bolt (3') coupled with the workpiece (3) is generated during the clamping process, and
- an electromechanical and/or inductive interface (12, 13) provided on the housing (4), which is connected to the drive device (11) and/or an evaluation device (11') inductively and/or by means of electrical lines (16), and
- a robot arm (14) which communicates with the interface (12, 13) in such a way that electrical data signals and/or electrical energy can be transmitted alternately and bidirectionally between the interface (12, 13) of the housing (4) and an electromechanical and/or inductive interface (12', 13') of the robot arm (14),
**characterised in that,** the drive device (11) is electrically operated and a free end of the robot arm (14), as soon as the robot arm (14) has placed the workpiece (3) on the support surface (6'), is rotatable in such a way that the electromechanical and inductive interfaces (12', 13') provided on the free end (15) of the robot arm (14) are aligned flush with the electromechanical and inductive interfaces (12, 13) of the housing (4).

2. Clamping device (1) according to claim 1, **characterised in that,** the evaluation device (11') is electrically or inductively connected to at least one proximity sensor (32), **in that** the position of the workpiece (3) is measured by the respective proximity sensor (32) with respect to a reference axis (4') of the housing (4) and/or with respect to a support surface (6) assigned to the housing (4), and **in that** the measurement result determined by the respective proximity sensor (32) is forwarded to the evaluation device (11') in the form of electrical data signals.

3. Clamping device (1) according to claim 1 or 2, **characterised in that,** the robot arm (14) is mounted on a chassis (17), **in that** a control device (18) is assigned to the chassis (17), by means of which the chassis (17) and/or the movements of the robot arm (14) are automatically moved, and **in that** a program for checking the clamping situation of the workpiece (3) on the clamping device (1) is run by the control device (18).

4. Clamping device (1) according to claim 3, **characterised in that,** the rotational speed of the drive device (11) and/or the stroke path of the clamping jaws (7, 8, 9) is generated by the control device (18), **in that** measurement results are generated by this query, which are used by the control device (18) to enable the machine tool (2).

5. Clamping device (1) according to any one of the preceding claims, **characterised in that,** the electromechanical interface (12) comprises one or more pins (19, 19'...) or sockets (20, 20'...), and **in that** corresponding sockets (21, 21'...) or pins (22, 22'...) are provided on the free ends (15) of the robot arm (14), which are mechanically and electrically coupled in pairs.

6. Clamping device (1) according to any one of the preceding claims, **characterised in that,** the inductive interface (13) comprises an interface surface (23), **in that** an inductively operated transmitting and/or receiving device (24) is assigned to the interface surface (23), and **in that** the robot arm (14) comprises an interface surface (25), to which a transmitting and/or receiving device (26) is assigned for communication with the transmitting and/or receiving device (26) of the interface (25) of the clamping device (1).

## Revendications

1. Dispositif de serrage (1) pour le maintien d'une pièce (3) à usiner par une machine-outil (2), comprenant :
- un boîtier (4),
- une surface d'appui (6') qui est formée par le boîtier (4),
- au moins un mors de serrage (7) monté mobile axialement dans le boîtier (4) et une butée antagoniste (10) formée par le boîtier (4), entre lesquels la pièce (3) est serrée, ou au moins deux mors de serrage (7, 8, 9) montés mobiles axialement dans le boîtier (4), entre lesquels la pièce (3) est serrée, et
- un dispositif d'entraînement (11) par lequel les mors de serrage mobiles (7, 8, 9) sont déplaçables de manière commandée, et par lequel une force de maintien transmise par les mors de serrage (7, 8, 9) à la pièce (3) ou à un boulon de serrage (3') couplé à la pièce (3) est générée pendant l'opération de serrage, et
- une interface électromécanique et/ou inductive (12, 13) prévue sur le boîtier (4), qui est connectée au dispositif d'entraînement (11) et/ou à un dispositif d'évaluation (11') de manière inductive et/ou au moyen de lignes électriques (16), et
- un bras de robot (14) qui communique avec l'interface (12, 13) de telle manière que des signaux de données électriques et/ou de l'énergie électrique peuvent être transmis alternativement et de manière bidirectionnelle entre l'interface (12, 13) du boîtier (4) et une interface électromécanique et/ou inductive (12', 13') du bras de robot (14), **caractérisé en ce que,** le dispositif d'entraînement (11) est actionné électriquement et une extrémité libre du bras de robot (14), dès que le bras de robot (14) a placé la pièce (3) sur la surface d'appui (6'), est rotative de telle manière que les interfaces électromécaniques et inductives (12', 13') prévues sur l'extrémité libre (15) du bras de robot (14) sont alignées en affleurement avec les interfaces électromécaniques et inductives (12, 13) du boîtier (4).

2. Dispositif de serrage (1) selon la revendication 1, **caractérisé en ce que,** le dispositif d'évaluation (11') est connecté électriquement ou inductivement à au moins un capteur de proximité (32), **en ce que** la position de la pièce (3) est mesurée par le capteur de proximité respectif (32) par rapport à un axe de référence (4') du boîtier (4) et/ou par rapport à une surface d'appui (6) associée au boîtier (4), et **en ce que** le résultat de mesure déterminé par le capteur de proximité respectif (32) est transmis au dispositif d'évaluation (11') sous forme de signaux de données électriques.

3. Dispositif de serrage (1) selon la revendication 1 ou 2, **caractérisé en ce que,** le bras de robot (14) est monté sur un châssis (17), **en ce qu'**un dispositif de commande (18) est associé au châssis (17), par lequel le châssis (17) et/ou les mouvements du bras de robot (14) sont déplacés automatiquement, et **en ce qu'**un programme de contrôle de la situation de serrage de la pièce (3) sur le dispositif de serrage (1) est exécuté par le dispositif de commande (18).

4. Dispositif de serrage (1) selon la revendication 3, **caractérisé en ce que,** la vitesse de rotation du dispositif d'entraînement (11) et/ou la course des mors de serrage (7, 8, 9) sont générées par le dispositif de commande (18), **en ce que** des résultats de mesure sont générés par cette interrogation, par lesquels la situation de serrage de la pièce (3) est utilisée par le dispositif de commande (18) pour un déverrouillage de la machine-outil (2).

5. Dispositif de serrage (1) selon l'une quelconque des revendications précédentes, **caractérisé en ce que,** l'interface électromécanique (12) présente une ou plusieurs broches (19, 19'...) ou des logements (20, 20'...), et **en ce que** des logements correspondants (21, 21'...) ou des broches (22, 22'...) sont prévus sur les extrémités libres (15) du bras de robot (14), qui sont couplés par paires mécaniquement et électriquement.

6. Dispositif de serrage (1) selon l'une quelconque des revendications précédentes, **caractérisé en ce que,** l'interface inductive (13) présente une surface de contact (23), **en ce qu'**un dispositif d'émission et/ou de réception (24) à fonctionnement inductif est associé à la surface de contact (23), et **en ce que** le bras de robot (14) présente une surface de contact (25), à laquelle est associé un dispositif d'émission et/ou de réception (26) pour la communication avec le dispositif d'émission et/ou de réception (24) de l'interface (13) du dispositif de serrage (1).
